# EUROPÄISCHE PATENTSCHRIFT

(11) **EP 3 608 232 B1**
(45) Veröffentlichungstag und Bekanntmachung des Hinweises auf die Patenterteilung: **21.10.2020**
(21) Anmeldenummer: 18188045.1
(22) Anmeldetag: 08.08.2018
(51) Int. Cl.: B65B 1/36, G01F 11/24, G01G 17/00, G01F 1/78, G01F 25/00

(54) **VERFAHREN ZUR ERZEUGUNG EINZELNER DOSIERMENGEN MITTELS EINES WALZENDOSIERERS**
METHOD FOR GENERATING INDIVIDUAL DOSED QUANTITIES BY MEANS OF A ROLLER DOSER
PROCÉDÉ DE PRODUCTION DE QUANTITÉS DE DOSAGE INDIVIDUELLES AU MOYEN D'UN DOSEUR À ROULEAUX

(43) Veröffentlichungstag der Anmeldung: 12.02.2020
(73) Patentinhaber: Harro Höfliger Verpackungsmaschinen GmbH, 71573 Allmersbach im Tal (DE)
(72) Erfinder: BRECHT, Sven, 71573 Allmersbach im Tal (DE); HANDEL, Bernhard, 71573 Allmersbach im Tal (DE); HILD, Marcus, 71573 Allmersbach im Tal (DE)
(74) Vertreter: Zurhorst, Stefan

(56) Entgegenhaltungen:
- EP-A1- 2 128 027
- EP-A1- 3 257 757
- DE-A1- 10 226 989
- US-A- 5 187 921

## Beschreibung

Die Erfindung betrifft ein Verfahren zur Erzeugung einzelner Dosiermengen eines pulvrigen Produkts mittels eines Walzendosierers.

Beispielsweise im Pharmabereich, aber auch im Bereich von Nahrungsergänzungsmitteln oder dgl. werden Pulver verarbeitet, die für die vorgesehene Darreichungsform in präzise abgemessenen Teilmengen bzw. Dosiermengen bereitgestellt werden müssen. Zielbehälter beispielsweise in Form von Blistern, Steckkapseln oder dergleichen werden mit solchen abgemessenen Dosiermengen eines pulvrigen Produkts befüllt, so dass der Verbraucher entsprechende Einheitsdosen zur Verfügung hat und einnehmen kann.

Derartige pulvrige Produkte werden insbesondere auf sogenannten Walzendosierern in einzeln abgemessene Dosiermengen überführt, welche dann in jeweilig zugeordneten Zielbehältern abgefüllt werden. Ein solcher Walzendosierer, wie er beispielsweise aus der DE 102 26 989 A1 bekannt ist, umfasst eine Dosierwalze, welche umfangsseitig mit mindestens einer, im Regelfall mit mehreren Dosieröffnungen versehen ist, wobei die Dosieröffnungen innenseitig mittels eines Filterelements begrenzt sind und durch das Filterelement hindurch mit einem Unterdruck beaufschlagbar sind. Unter Einwirkung des Unterdrucks wird in einer Füllposition Pulver aus einem Produktvorrat in die Dosieröffnungen eingesaugt, wobei sich Dosiermengen des Pulvers bilden, deren Volumen dem Volumen der jeweiligen Dosieröffnung entspricht. Die Dosierwalze wird soweit gedreht, dass sich die mit der Dosiermenge befüllten Dosieröffnungen in einer Ausstoßposition befinden. Die solchermaßen gebildeten Dosiermengen werden dann aus den Dosieröffnungen ausgestoßen und zum Zielbehälter weitergeleitet. Die Dosierwalze wird soweit weitergedreht, dass sich die entleerte Dosieröffnung wieder in der Füllposition befindet. Die vorstehenden Schritte werden mehrfach zyklisch wiederholt.

Aus den vorangegangenen Ausführungen wird deutlich, dass es sich bei der Dosierung mittels eines Walzendosierers um eine volumetrische Dosierung handelt. Angestrebt ist im Regelfall aber eine Dosierung, bei der die abgemessene Dosiermenge eine bestimmte Masse innerhalb einer zulässigen Toleranzbandbreite aufweist. In der Praxis hat sich gezeigt, dass die von einem Walzendosierer volumetrisch bereitgestellten Dosiermengen hinsichtlich der tatsächlich erreichten Masse nicht immer den Anforderungen genügen.

Der Erfindung liegt deshalb die Aufgabe zugrunde, ein Verfahren anzugeben, mittels dessen die von einem Walzendosierer erzeugten Einzelmassen in einfacher Weise innerhalb eines vorgegebenen Toleranzbereichs gehalten werden können.

Diese Aufgabe wird durch ein Verfahren mit den Merkmalen des Anspruchs 1 gelöst.

Die Erfindung beruht zunächst auf der Erkenntnis, dass man die zu beobachtenden Schwankungen in der tatsächlich erzielten Dosiermasse in zwei Kategorien aufteilen kann. In einer ersten Kategorie gibt es kurzfristige Schwankungen, bei denen sich eine Einzelmasse von der nachfolgenden oder vorangehenden Einzelmasse unterscheidet. Solche Schwankungen zwischen Einzelmassen sind insbesondere bei sehr kleinen Zielmassen von wenigen Milligramm auf örtliche Dichteschwankungen im Pulver, auf Schwankungen im Füllgrad der einzelnen Dosieröffnungen und auch auf schwankende Entleerungsgrade beim Ausstoßen der Dosiermassen zurückzuführen. Derweil man insgesamt versuchen kann, Schwankungen innerhalb dieser ersten Kategorie zu minimieren, so gelten sie jedoch dem Grunde nach als unvermeidbar.

Hiervon zu unterscheiden ist eine zweite Kategorie von Masseveränderungen, die sich längerfristig über eine größere Anzahl von Prozesstakten einstellt. Erfindungsgemäß wurde erkannt, dass dem eine allmähliche, trendartige Veränderung der Pulverdichte in den fertig abgemessenen Dosiermengen zugrunde liegt, welche ihrerseits vorrangig auf zwei Einflussgrößen zurückzuführen ist. Zum einen kann sich das zugeführte Pulver in seinen Eigenschaften verändern. Zum anderen neigen die am Boden der Dosieröffhungen befindlichen Filterelemente dazu, sich im Laufe zahlreicher Prozessschritte nach und nach mit Pulverpartikeln oder dergleichen zuzusetzen, was das Niveau des einwirkenden Unterdrucks beim Ansaugen des pulvrigen Produkts beeinflusst. Es wurde beobachtet, dass bei konstant gehaltenem Druckniveau an der Unterdruckquelle sich der tatsächlich in der Dosieröffnung wirkende Unterdruck infolge des allmählich sich zusetzenden Filterelements allmählich abnimmt. Mit dem abnehmenden Wirkunterdruck nimmt auch die Dichte der Dosiermengen nach und nach ab, was bei konstant gehaltenem Dosiervolumen zu nach und nach abnehmenden Dosiermassen führt.

Hierauf aufbauend kommt nun im Rahmen der Erfindung eine Messvorrichtung zur Massenbestimmung einzelner Dosiermengen zum Einsatz. Bevorzugt handelt es sich hierbei um ein kapazitives Messsystem, insbesondere mit einem sogenannten AMV-Sensor (Advanced Mass Verification Sensor). Im Rahmen der Erfindung können aber auch andere Mess- bzw. Wägesysteme zum Einsatz kommen, welche die Bestimmung der Einzelmassen einzelner oder mehrerer kumulierter Dosiermengen erlauben.

Erfindungsgemäß wird nun angestrebt, nicht die kurzfristigen Massenschwankungen der obigen ersten Kategorie zu erfassen und auf sie einzuwirken. Vielmehr geht es um das Erkennen eines Trends, weshalb die Einzelmassen mehrerer ausgestoßener Dosiermengen sequenziell mittels der Messvorrichtung bestimmt werden, und wobei dann aus den bestimmten Einzelmassen ein Massenmittelwert gebildet wird. Hierfür kann es ausreichen, nur jede zweite, dritte oder n-te Dosiermasse zu erfassen und daraus einen Mittelwert zu bilden. Bevorzugt werden jedoch die Einzelmassen mehrerer unmittelbar nacheinander ausgestoßener Dosiermengen sequenziell bestimmt, woraus dann der Massenmittelwert bestimmt wird. Jedenfalls wird der gebildete Massenmittelwert mit einem vorgegebenen inneren Sollmassenbereich verglichen.

Abhängig vom Ergebnis dieses Vergleichs stellen sich nun zumindest zwei verschiedene Grundszenarien ein. Sofern im ersten Szenario der gebildete Massenmittelwert innerhalb des vorgegebenen inneren Sollmassenbereichs liegt, bleibt das Niveau des in der Füllposition auf die Dosieröffnung einwirkenden Unterdrucks unverändert. Es findet also keine Anpassung der Betriebsparameter statt. Vielmehr wird der laufende Dosierprozess unverändert fortgeführt, wobei ein neuer Zyklus von Messungen und Massenmittelwertbildung beginnt.

Sofern jedoch im zweiten Szenario der gebildete Massenmittelwert außerhalb des vorgegebenen inneren Sollmassenbereichs liegt, wird ein angepasster Unterdruck derart ermittelt, dass bei zu geringem Massenmittelwert das Niveau des Unterdrucks erhöht und bei zu hohem Massenmittelwert das Niveau des Unterdrucks verringert wird. Die Dosieröffnungen werden nun in ihrer Füllposition mit dem angepassten Unterdruck beaufschlagt. Hierbei wird sich der Effekt zunutze gemacht, dass über eine Veränderung des Unterdruckniveaus eine Veränderung der Masse der Dosiermenge bei gleichbleibendem Dosiervolumen herbeigeführt werden kann. Über die vorstehend beschriebene Anpassung des Unterdrucks erfolgt eine Nachregelung der tatsächlich erzielten Dosiermasse mit dem Ziel, dass diese wieder innerhalb des vorgegebenen inneren Sollmassenbereichs liegt. Die erfindungsgemäße Regelung ist jedoch keine Einzelmassenregelung, sondern regelt die tatsächlich erzielten Einzelmassen in ihrem über mehrere Messungen ermittelten Massenmittelwert, was einer Trendregelung gleichkommt und hier als Tendenzregelung bezeichnet wird. Störungen des Regelprozesses durch einzelne kurzfristige Ausreißer oder Schwankungen der oben genannten ersten Kategorie bleiben unberücksichtigt, während längerfristige Veränderungen, beispielsweise infolge von Produktveränderungen oder von sich zusetzenden Filterelementen, zuverlässig ausgeregelt werden können. Dieses Ausregeln kann komfortabel und zuverlässig vollautomatisch ohne Einwirkung einer Bedienperson durchgeführt werden. Auf bedienerfreundliche Weise wird eine Erhöhung der Laufzeit der Maschine erzielt. Durch Vermeidung von fehldosierten Produkten wird die Effizienz erhöht. Außerdem kann das erfindungsgemäße Verfahren in eine Prozessüberwachung integriert werden. Abweichungen in den Prozessparametern sowie Produktschwankungen können frühzeitig erkannt werden, was eine rechtzeitige Korrektur ermöglicht.

Ergänzend kann es zweckmäßig sein, dass der gebildete Massenmittelwert auch mit einem vorgegebenen äußeren Sollmassenbereich verglichen wird. Die Beaufschlagung der Dosieröffnung in ihrer Füllposition mit dem angepassten Unterdruck erfolgt weiterhin dann, wenn der gebildete Massenmittelwert außerhalb des inneren Sollmassenbereichs ist, wenn er zusätzlich aber auch die Bedingung erfüllt, dass er innerhalb des äußeren Sollmassenbereichs liegt. Sofern jedoch der gebildete Massenmittelwert außerhalb des äußeren Sollmassenbereichs liegt, ist dann davon auszugehen, dass hier eine zu große und deshalb bedenkliche Abweichung vorliegt. In diesem Fall wird dann ein Fehlersignal generiert. Abhängig vom Fehlersignal kann beispielsweise der Prozess unterbrochen werden, während eine Anpassung des Unterdrucks unterbleibt.

In geeigneten Bauformen des Walzendosierers wird die Dosieröffnung in ihrer Ausstoßposition durch das Filterelement hindurch mit Überdruck beaufschlagt, um hierdurch die Dosiermenge aus der Dosieröffnung auszublasen bzw. auszustoßen. In bevorzugter Weiterbildung des erfindungsgemäßen Verfahrens wird das Niveau des hier wirkenden Überdrucks analog zu dem in der Füllposition wirkenden Unterdruck angepasst. Hiermit kann beispielsweise dem Umstand Rechnung getragen werden, dass für eine wiederholbare Massenbestimmung, beispielsweise mittels eines kapazitiven Messsystems, es auf wiederkehrende, gleichbleibende Ausstoßbedingungen ankommt. Durch die genannte Anpassung des Überdruckniveaus kann der Einfluss des sich nach und nach zusetzenden Filterelements kompensiert werden, womit die Ausblasbedingungen in gewünschter Weise konstant gehalten werden können.

In einer ersten vorteilhaften Variante kann es zweckmäßig sein, dass die Druckanpassung in fest vorgegebenen Druckschritten vorgenommen wird. Hierfür ist ein geringer Steuerungsaufwand erforderlich, was zu einer Vereinfachung der Prozessführung beiträgt. In einer alternativen Variante wird die Druckanpassung um einen funktional vom Differenzmaß zwischen Massenmittelwert und Sollmasse abhängigen Anpassungswert vorgenommen. In einer solchen funktionalen, beispielsweise proportionalen Anpassung ist eine sehr exakte Nachregelung möglich. Die genannten Varianten der Druckanpassung können gleichermaßen für eine Anpassung des Unterdrucks und/oder auch für eine Anpassung des Überdrucks herangezogen werden.

Die Möglichkeiten der Druckanpassung innerhalb eines Walzendosierers sind begrenzt. Insbesondere steht nur ein limitierter anwendbarer Unterdruckbereich zur Verfügung. In einem solchen Fall, in dem das Niveau des ermittelten angepassten Unterdrucks außerhalb eines zulässigen Druckbereichs liegt, wird die Dosieröffnung in der Füllposition mit einem tatsächlich angepassten Unterdruck beaufschlagt, dessen Niveau einem korrespondierenden Grenzwert des zulässigen Druckbereichs entspricht. Dies ist dann zwar nicht der exakt gewünschte angepasste Unterdruck. Dennoch kann eine damit einhergehende weniger ausgeprägte Anpassung ausreichen, dass die tatsächlich damit erzielten Massenmittelwerte immer noch innerhalb des zulässigen Bereichs liegen, so dass die Produktion fortgeführt werden kann. Erst bei einer Detektion von Massenmittelwerten, die nicht mehr im zulässigen Bereich liegen, wird ein Fehlersignal generiert, aufgrund dessen eine Produktionsunterbrechung vorgenommen werden kann.

Für eine zuverlässige Bestimmung der Massenmittelwerte und des sich damit abzeichnenden Trends einer Massenveränderung ist es wünschenswert, den Einfluss von unvermeidlichen kurzfristigen Massenschwankungen weitgehend zu eliminieren. Dies kann bereits dadurch erreicht werden, dass aus nur wenigen Einzelmassen ein solcher Massenmittelwert abgeleitet wird. Bevorzugt wird jedoch der Massenmittelwert aus mindestens 20 und insbesondere auch mindestens 100 bestimmten Einzelmassen gebildet. Insbesondere kann es zweckmäßig sein, zunächst mit einer geringen Anzahl von Einzelmassen für die Massenmittelwertbestimmung anzufangen, wobei dann mit fortschreitender Prozesssicherheit auf höhere Anzahlen von Einzelmassen zur Massenmittelwertbestimmung zurückgegriffen wird.

In vorteilhafter Weiterbildung der Erfindung werden zusätzlich noch folgende Verfahrensschritte ausgeführt: Aus den bestimmten Einzelmassen der mehreren ausgestoßenen Dosiermengen wird zusätzlich zum Massenmittelwert auch deren relative Standardabweichung errechnet und mit einer vorgegebenen Grenzabweichung verglichen. Sofern die errechnete Standardabweichung kleiner als oder gleich der Grenzabweichung ist, wird der Massenmittelwert für die Tendenzregelung eingesetzt. Sofern die errechnete Standardabweichung größer als die Grenzabweichung ist, wird ein Fehlersignal generiert. Hierdurch wird sichergestellt, dass die erfindungsgemäße Tendenzregelung nur dann zum Einsatz kommt, wenn ihr ausreichend zuverlässige Messdaten zugrunde liegen.

Ein Ausführungsbeispiel der Erfindung ist nachfolgend anhand der Zeichnung näher beschrieben. Es zeigt:

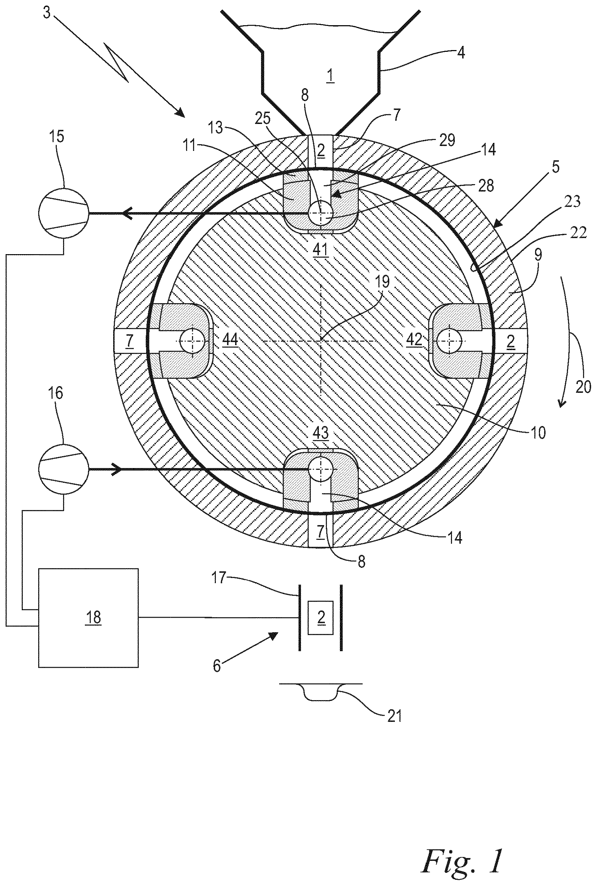

- Fig. 1: in einer schematischen Querschnittdarstellung einen Walzendosierer mit einem Produktvorrat, mit einer Dosierwalze und mit einer Messvorrichtung zur Massenbestimmung der einzelnen Dosiermengen bei der Ausführung des erfindungsgemäßen Verfahrens.

Fig. 1 zeigt in einer schematischen Querschnittdarstellung einen Walzendosierer 3 bei der Erzeugung einzelner Dosiermengen 2 eines pulvrigen Produkts 1 und zur Überführung solcher einzelner Dosiermengen 2 in einen Zielbehälter 21. Bei dem pulvrigen Produkt handelt es sich hier um ein pharmazeutisches Pulver. Es kann sich aber auch um ein pulverförmiges Nahrungsergänzungsmittel oder dergleichen handeln. Der Zielbehälter 21 ist hier ein schematisch angedeuteter Blister, der nach der Befüllung noch mit einer Deckfolie versiegelt wird. Als Zielbehälter 21 kommen aber auch Stecckapseln oder andere Behälter in Betracht.

Der Walzendosierer 3 umfasst einen Produktvorrat 4, eine Dosierwalze 5 und eine Messvorrichtung 6. Im trichterförmigen Produktvorrat 4 wird das pulvrige Produkt 1 zur Abmessung bereitgehalten. Mittels der Dosierwalze werden aus dem Produktvorrat 4 Teilmengen des pulvrigen Produkts 1 entnommen und daraus volumetrisch exakt definierte Dosiermengen 2 gebildet. Eine anschließende Massenbestimmung einzelner, insbesondere aller Dosiermengen 2, erfolgt mittels der Messvorrichtung 6.

Die Dosierwalze 5 erstreckt sich entlang einer Längsachse und ist bezogen auf diese Längsachse im Wesentlichen zylindrisch ausgebildet. Umfangsseitig weist sie mindestens eine Dosieröffnung 7 auf. Im gezeigten bevorzugten Ausführungsbeispiel ist die Dosierwalze 5 mit mehreren Dosieröffnungen 7 versehen. Obwohl in der hier gezeigten Querschnittsdarstellung nicht erkennbar, bilden jeweils drei bis zwölf Dosieröffnungen 7 eine Öffnungsreihe, die achsparallel zur Drehachse 19 verläuft. Vier solcher Öffnungsreihen sind in Umfangsrichtung um die Drehachse 19 herum in gleichen Winkelabständen, also in 90° zueinander positioniert. Von den genannten Öffnungsreihen sind hier je eine, also insgesamt vier Dosieröffnungen 7 erkennbar. In Achsrichtung und/oder in Umfangsrichtung können aber auch abweichende Anzahlen von Dosieröffnungen 7 zweckmäßig sein.

Die Dosierwalze 5 weist einen zentralen Spannkern 10 und einen den Spannkern 10 mit radialem Abstand umschließenden Walzenmantel 9 auf. Die Dosieröffnungen 7 sind als den Walzenmantel 9 radial durchgreifende Bohrungen mit kreisförmigem Grundriss ausgebildet. Es können aber auch andere Grundrissformen zweckmäßig sein. Beispielsweise kann die Form des Grundrisses lediglich teilweise rund, oval, vieleckig, rechteckig oder quadratisch sein. Radial nach außen, also an einer Außenseite 22 des Walzenmantels 9 sind die Dosieröffnungen 7 offen. Radial nach innen, also an einer Innenseite 23 des Walzenmantels 9 sind sie mittels je eines Filterelements 8 begrenzt, welches in Größe und Form dem Querschnitt der jeweiligen Dosieröffnung 7 entspricht und deren Boden bildet.

Korrespondierend zur Anzahl der oben genannten Öffnungsreihen weist der Spannkern 10 eine Anzahl von achsparallelen zur Drehachse 19 verlaufenden Aufnahmenuten auf, in denen je eine Filterleiste 11 gehalten ist. Zwischen der Filterleiste 11 und der Innenseite 23 des Walzenmantels 9 ist eine optionale Dichtung 13 angebracht.

In den Filterleisten 11 ist je ein verzweigter Druckkanal 14 ausgebildet, welcher durch die Filterelemente 8 hindurch in korrespondierende Dosieröffnungen 7 hinein mündet. Der Druckkanal 14 umfasst einen Hauptkanal 28 und mindestens eine Verzweigung 29. Im Ausführungsbeispiel umfasst der Druckkanal 14 zwölf Verzweigungen 29 korrespondierend zu einer entsprechenden Anzahl von Dosieröffnungen 7 innerhalb einer achsparallelen Reihe davon. Der Hauptkanal 28 erstreckt sich entlang einer Längsachse 25 des Druckkanals 14. Die Längsachse 25 verläuft parallel zur Drehachse 19 der Dosierwalze 5. Die Verzweigungen 29 des Druckkanals 14 erstrecken sich ausgehend vom Hauptkanal 28 radial bezüglich der Drehachse 19 bis zu den Dosieröffnungen 7.

Die Filterelemente 8 sind gemeinsam durch einen Bogen aus geeignetem Filtermaterial gebildet, welcher um den Spannkern 10 mit den Filterleisten 11 herum gewickelt ist. Es können auch aufgeklebte Filterelemente 8 zum Einsatz kommen. Die Filterleisten 11 sind über einen nicht dargestellten Spannkonus radial nach außen unter Zwischenlage des Filtermaterials gegen die Innenseite des Walzenmantels 9 verspannt. Die Dichtungen 13 pressen dabei einerseits das Filtermaterial gegen die Innenseite des Walzenmaterials, während sie andererseits rings um das jeweilige Filterelement 8 herum die zugehörige Verzweigung 29 des Druckkanals 14 sowie auch die jeweilige Dosieröffnung 7 gegen die Umgebung abdichten. Hierdurch ist sichergestellt, dass ein Druckausgleich zwischen Dosieröffnung und Druckkanal 14 allein durch das zugehörige Filterelement 8 hindurch erfolgt, und dass also die Dosieröffnungen über den zugeordneten Druckkanal 11 durch das jeweilige Filterelement 8 hindurch mit einem bestimmten gewünschten Druck beaufschlagt werden können.

Die Dosierwalze 5 ist um eine Drehachse 19 in Richtung eines Pfeils 20 drehbar gelagert und mit einem zugehörigen, hier nicht dargestellten Drehantrieb versehen. Im Betrieb wird die Dosierwalze getaktet gedreht, wobei die einzelnen Dosieröffnungen 7 in mindestens zwei Takten zyklisch in einer in Gewichtskraftrichtung oberen Füllposition 41 und einer in Gewichtskraftrichtung unteren Ausstoßposition 43 zu liegen kommen. Anstelle einer getakteten Bewegung kann auch eine kontinuierliche Drehung zweckmäßig sein. Im gezeigten Ausführungsbeispiel durchlaufen die einzelnen Dosieröffnungen 7 in vier Takten zyklisch vier verschiedene Positionen, beginnend mit der oberen Füllposition 41, gefolgt von einer ersten Zwischenposition 42. Danach folgen die untere Ausstoßposition 43 und eine zweite Zwischenposition 44, bevor der Zyklus an der oberen Füllposition 41 wieder beginnt. In der oberen Füllposition 41 wird die jeweilige Dosieröffnung 7 mit dem pulvrigen Produkt 1 unter Bildung einer Dosiermenge 2 aus dem Produktvorrat 4 heraus befüllt. In der nachfolgenden ersten Zwischenposition 42 kann optional eine Füllstandskontrolle vorgenommen werden. In der unteren Ausstoßposition 43 wird die Dosiermenge 2 aus der Dosieröffnung 7 ausgestoßen und dem Zielbehälter 21 zugeführt. Die nunmehr entleerte Dosieröffnung 7 wird zur zweiten Zwischenposition 44 weiterbewegt und kann dort optional beispielsweise durch Ausblasen gereinigt werden.

Die Dosieröffnungen 7 sind innenseitig und durch das jeweilige Filterelement 8 hindurch bei Bedarf mit einem Unterdruck beaufschlagbar. Hierzu wird zumindest in der Füllposition 41 eine unterdruckübertragende Verbindung zwischen dem Druckkanal 14 und einer Unterdruckquelle 15 hergestellt. Das Niveau des von der Unterdruckquelle 15 bereitgestellten Unterdrucks wird mittels eines schematisch angedeuteten Steuergeräts 18 eingestellt, was durch eine geeignete Steuerung, gegebenenfalls aber auch durch eine Regelung erfolgen kann. Jedenfalls überträgt sich der solchermaßen eingestellte Unterdruck durch den Druckkanal 14 und das Filterelement 8 hindurch in die Dosieröffnung 7, wenn diese sich in der oberen Füllposition 41 befindet. Der Unterdruck saugt das pulvrige Produkt 1 aus dem Produktvorrat 4 in die Dosieröffnung 7. Das Filterelement 8 ist hinsichtlich seiner Durchlässigkeit derart bemessen und auf das Produkt 1 abgestimmt, dass es zwar luftdurchlässig und damit auch druckübertragend ist, dass aber das pulvrige Produkt 1 zurückgehalten und am Durchtritt gehindert wird. Folglich entsteht eine Dosiermenge 2 des pulvrigen Produkts 1, die die Dosieröffnung 7 vollständig ausfüllt, und deren Volumen dem Volumen der Dosieröffnung 7 entspricht. Der Vorgang des Ausfüllens kann noch optional durch einen nicht dargestellten Rührer im Produktvorrat 4 unterstützt werden. Abhängig vom Niveau des herrschenden Unterdrucks und von den Eigenschaften des Produkts 1 stellt sich jedenfalls ein bestimmter Verdichtungsgrad des Produkts 1 in der Dosieröffnung 7 ein, so dass aus dem vorgegebenen Volumen der Dosieröffnung 7 auch eine bestimmte Masse der Dosiermenge 2 folgt.

Der anliegende Unterdruck kann auf gleichem oder auch auf verringertem Niveau noch bis zum Erreichen der Ausstoßposition 43 aufrechterhalten werden, um ein vorzeitiges Herausfallen der Dosiermenge 2 aus der Dosieröffnung 7 zu verhindern. Spätestens beim Erreichen der unteren Ausstoßposition 43 wird jedoch die Unterdruckbeaufschlagung beendet, so dass die Dosiermenge 2 hier aus der Dosieröffnung 7 heraustritt und in den Zielbehälter 21 überführt wird. Dies kann durch einfaches Abschalten der Unterdruckbeaufschlagung erreicht werden, so dass die Dosiermenge 2 in Folge ihres Eigengewichts aus der Dosieröffnung 7 herausfällt. Im gezeigten bevorzugten Ausführungsbeispiel wird jedoch die Dosieröffnung 7 in der Ausstoßposition 43 durch das Filterelement 8 hindurch anstelle von Unterdruck nun mit Überdruck beaufschlagt. Hierzu wird eine überdruckübertragende Verbindung zwischen dem Druckkanal 14 und einer Überdruckquelle 16 hergestellt. Das Niveau des von der Überdruckquelle 16 bereitgestellten Überdrucks wird ebenso wie im vorgenannten Fall der Unterdruckquelle mittels des schematisch angedeuteten Steuergeräts 18 eingestellt, was erneut durch eine geeignete Steuerung, gegebenenfalls aber auch durch eine Regelung erfolgen kann. Jedenfalls überträgt sich der solchermaßen eingestellte Überdruck durch den Drucckanal 14 und das Filterelement 8 hindurch in die Dosieröffnung 7, wenn diese sich in der unteren Ausstoßposition 43 befindet. Der Überdruck bläst die Dosiermenge aus der Dosieröffnung 7 heraus. Ergänzend kann die Überdruckbeaufschlagung noch in der nachfolgenden zweiten Zwischenposition 44 für den dortigen Reinigungsvorgang der entleerten Dosieröffnung 7 verwendet werden.

Teil der oben schon erwähnten Messvorrichtung 6 zur Massenbestimmung der einzelnen Dosiermengen 2 ist ein kapazitiver Sensor 17, welcher ebenfalls mit dem Steuergerät 18 verbunden ist. Im Steuergerät 18 werden die Messdaten des kapazitiven Sensors 17 erfasst und ausgewertet, was insgesamt zur Bildung der Messvorrichtung 6 führt. Anstelle einer kapazitiven Messvorrichtung 6 kann aber auch eine andere geeignete Messvorrichtung zur Bestimmung der Einzelmassen der Dosiermengen 2 zum Einsatz kommen. Jedenfalls fallen die aus der Dosieröffnung 7 in der unteren Ausstoßposition 43 ausgestoßenen Dosiermengen 2 durch den Sensor, hier durch den kapazitiven Sensor 17 hindurch in den Zielbehälter 21. Aus der hierbei im kapazitiven Sensor 17 erfolgenden Feldänderung wird die Masse der hindurchtretenden Dosiermenge 2 entsprechend einem AMV-System (Advance Mass Verification System) bestimmt. Für die Ausführung des erfindungsgemäßen Verfahrens ist es nicht zwingend erforderlich, dass die Masse jeder einzelnen ausgeworfenen Dosiermenge 2 bestimmt wird. Vielmehr kann es ausreichen, wenn sich einzelne Massenbestimmungen erst nach einigen Dosierzyklen wiederholen. Bevorzugt wird jedoch eine Massenbestimmung bei 100% der abgemessenen Dosiermengen 2 durchgeführt. Eine weitere Möglichkeit besteht darin, nicht jede Einzelmasse jeder einzelnen Dosiermenge 2 individuell zu bestimmen. Vielmehr kann es auch ausreichen, kumulativ die Massensumme mehrerer Dosiermengen 2 zu bestimmen, wobei dann gemittelte Einzelmassen der einzelnen Dosiermenge 2 mittels Division der kumulierten Massensumme durch die Anzahl der mehreren Dosiermengen 2 gebildet werden. Letzteres beinhaltet im Rahmen der Erfindung auch die Möglichkeit, auf die Bestimmung der gemittelten Einzelmassen zu verzichten und die erfindungsgemäße Tendenzregelung darauf aufzubauen, dass als Einzelmassen unmittelbar die kumulierten Massensummen eingesetzt werden, und daraus dann der Massenmittelwert gebildet wird.

Jedenfalls wird im Steuergerät 18 aus den sequenziell bestimmten Einzelmassen der mehreren ausgestoßenen Dosiermengen 2 ein Massenmittelwert gebildet und mit einem vorgegebenen inneren Sollmassenbereich verglichen. Zur Verdeutlichung seien hier einige, allerdings nicht einschränkend zu verstehende, beispielhafte Zahlenangaben genannt. Beispielsweise beträgt die zu erreichende Sollmasse einer einzelnen Dosiermenge 2 hier 20 mg, wozu ein beispielhafter innerer Sollmassenbereich vorgegeben wird, der von 19 mg bis 21 mg reicht. Sowohl die Einzelmassen der einzelnen Dosiermengen 2 als auch die daraus resultierenden Messwerte der Messvorrichtung 6 führen zu Einzelmassen, die mit variierenden Beträgen bestimmt werden. Dabei ist es für das erfindungsgemäße Verfahren zunächst unerheblich, ob einzelne dieser bestimmten Einzelmassen innerhalb oder außerhalb des vorgegebenen inneren Sollmassenbereichs liegen. Vielmehr wird aus bevorzugt mindestens 20 und insbesondere aus mindestens 100 bestimmten Einzelmassen ein Massenmittelwert gebildet, der hier beispielsweise 20,5 mg beträgt. Sofern nun der gebildete Massenmittelwert wie im hier vorliegenden Beispiel mit 20,5 mg innerhalb des vorgegebenen inneren Sollmassenbereichs von hier beispielsweise 19 mg bis 21 mg liegt, bleibt das Niveau des in der Füllposition 41 auf die Dosieröffnung 7 einwirkenden Unterdrucks unverändert. Das vorstehende Dosierverfahren wird fortgeführt, wobei neben der Abmessung der einzelnen Dosiermengen auch deren Massenbestimmung fortgesetzt wird. Allerdings beginnt nun die vorstehende Bildung eines Massenmittelwertes von neuem unter Zugrundelegung einer neuen Reihe von Messwerten.

Es kann aber der Fall eintreten, dass insbesondere später im Laufe langsam sich verändernder Bedingungen ein Massenmittelwert ermittelt wird, der außerhalb des vorgegebenen inneren Sollmassenbereichs liegt. Dies kann auf sich verändernde Produkteigenschaften und/oder auf langsam sich zusetzende Filterelemente 8 zurückzuführen sein. Beispielhaft kann ein solcher später erfasster Massenmittelwert 18 mg betragen und damit unterhalb der beispielhaften inneren Sollmassenbereichs von 19 mg bis 21 mg liegen. In diesem Fall wird ein angepasster Unterdruck derart ermittelt, dass bei zu geringem Massenmittelwert das Niveau des Unterdrucks erhöht und bei zu hohem Massenmittelwert das Niveau des Unterdrucks verringert wird. Das Steuergerät 18 wirkt entsprechend auf die Unterdruckquelle 15 ein, demnach die Dosieröffnung in der Füllposition mit dem angepassten Unterdruck beaufschlagt wird. Im vorgenannten Beispiel wird der angepasste Unterdruck gegenüber dem vorangegangenen Wert erhöht, weist also einen größeren Differenzbetrag zum Umgebungsdruck auf. Fortan stellt sich in der Folge eine höhere Verdichtung des pulvrigen Produkts 1 in der Dosieröffnung 7 ein, was bei gleichbleibendem Kammervolumen zu einer erhöhten Dosiermasse führt.

Auch hiervon ausgehend wird der Prozess des Dosierens und Messens fortgeführt, wobei nun ein neuer Zyklus von Einzelmassenbestimmung und Mittelwertbildung beginnt. Sofern nun dieser neue Mittelwert wieder innerhalb des oben schon erwähnten inneren Sollmassenbereichs liegt, bleibt der zuvor angepasste Unterdruck nun unverändert. Andernfalls erfolgt eine weitere Anpassung nach dem zuvor beschriebenen Muster, bis der ermittelte Massenmittelwert nun wie gewünscht innerhalb des vorgegebenen inneren Sollmassenbereichs liegt.

Die vorstehend beschriebene Anpassung bzw. Trendregelung des Unterdrucks unterliegt jedoch gewissen zusätzlichen Grenzen. Als eine solche zusätzliche Grenze kann ein vorgegebener äußerer Sollmassenbereich zum Einsatz kommen. Dieser äußere Sollmassenbereich kann beispielsweise einem Toleranzbereich entsprechen, innerhalb dessen die abgemessenen Dosiermengen noch akzeptabel sind, und außerhalb dessen die Dosiermengen verworfen werden müssen. Alternativ oder zusätzlich kann durch den äußeren Sollmassenbereich festgelegt werden, dass außerhalb liegende Massenmittelwerte zu weit vom gewünschten Wert entfernt sind und deshalb davon ausgegangen werden muss, dass die angestrebte Trendregelung nicht zum gewünschten Erfolg führt. Jedenfalls besteht eine erfindungsgemäße Option darin, dass der gebildete Massenmittelwert auch mit diesem äußeren Sollmassenbereich verglichen wird. Die Beaufschlagung der Dosieröffnung in der Füllposition mit dem angepassten Unterdruck nach obigem Muster erfolgt nur dann, wenn der gebildete Massenmittelwert außerhalb des inneren Sollmassenbereichs und innerhalb des äußeren Sollmassenbereichs liegt. Sofern jedoch der gebildete Massenmittelwert außerhalb des äußeren Sollmassenbereichs liegt, wird ein Fehlersignal generiert, welches beispielsweise zum Abbruch des Dosierverfahrens genutzt werden kann.

Auch der vorstehende zusätzliche Vergleich soll hier noch an einem Beispiel erläutert werden. Ein beispielhafter äußerer Sollmassenbereich wird von 17 mg bis 23 mg festgelegt. Der weiter oben schon erwähnte Massenmittelwert, der mit einem Betrag von 18 mg ermittelt wurde, liegt außerhalb des beispielshaften inneren Sollmassenbereichs von 19 mg bis 21 mg, jedoch innerhalb des beispielhaften äußeren Sollmassenbereichs von 17 mg bis 23 mg. In der Folge wird die Anpassung des Unterdrucks wie oben beschrieben vorgenommen. Sofern jedoch ein Massenmittelwert von beispielsweise 16 mg bestimmt wird, liegt dieser außerhalb des beispielhaften äußeren Sollmassenbereichs von 17 mg bis 23 mg, was dann zu einer Fehlermeldung führt. In diesem Falle wird davon ausgegangen, dass eine Tendenzregelgrenze überschritten ist, dass also die erfindungsgemäße Tendenzregelung möglicherweise nicht zum gewünschten Erfolg führt, und dass entsprechende Gegenmaßnahmen einzuleiten sind.

Eine weitere noch zu berücksichtigende Grenze kann beispielsweise in den Grenzen des verfügbaren Unterdrucks liegen. Es kann der Fall eintreten, dass mittels der erfindungsgemäßen Trendregelung ein angepasster Unterdruck ermittelt wird, der systemseitig gar nicht bereitgestellt werden kann. Sofern das Niveau des ermittelten angepassten Unterdrucks außerhalb eines zulässigen bzw. verfügbaren Druckbereichs liegt, kann dies erkannt und das Verfahren abgebrochen werden. Allerdings muss in einem solchen Fall das Verfahren nicht notwendig abgebrochen werden. Vielmehr kann es zweckmäßig sein, dass die Dosieröffnung in der Füllposition mit einem tatsächlich angepassten Unterdruck beaufschlagt wird, dessen Niveau einem korrespondierenden Grenzwert des zulässigen Druckbereichs entspricht. Wenn also die vorstehend beschriebene Trendregelung beispielsweise dazu führt, dass in der oberen Füllposition 41 zunächst -800 mbar relativer Unterdruck wirken, und nachfolgend -900 mbar relativer Unterdruck wirken sollen, während tatsächlich aber nicht mehr als -850 mbar an relativem Unterdruck verfügbar ist, so werden nun diese -850 mbar als korrespondierender Grenzwert des zulässigen Druckbereichs angewandt.

Wie weiter oben schon erwähnt, ist neben der Unterdruckquelle 15 auch die Überdruckquelle 16 mit dem Steuergerät 18 verbunden, so dass das Überdruckniveau der Überdruckquelle 16 mittels des Steuergeräts 18 bestimmt bzw. angesteuert werden kann. In der hier beschriebenen bevorzugten Ausgestaltung des Verfahrens wird die Dosieröffnung 7 in ihrer Ausstoßposition 43 durch das Filterelement 8 hindurch mit dem von der Überdruckquelle 16 bereitgestellten Überdruck beaufschlagt, wobei das Niveau des Überdrucks analog zu dem in der Füllposition 41 wirkenden Unterdruck angepasst wird. Weiter oben wurde beispielhaft beschrieben, dass der Unterdruck bzw. dessen Differenz zum Umgebungsdruck erhöht wurde. Folgerichtig wird auch der Ausblasüberdruck bzw. dessen Differenz zum Umgebungsdruck erhöht, um trotz eines möglicherweise teilweise zusitzenden Filterelements 8 ein zuverlässiges Ausblasen zu bewirken.

Je nach Anwendungsfall kann es zweckmäßig sein, die vorstehend beschriebene Druckanpassung entweder in fest vorgegebenen Schritten von beispielsweise 100 mbar oder 50 mbar vorzunehmen. Alternativ kann eine Druckanpassung mit einem Anpassungswert vorgenommen werden, welcher funktional vom Differenzmaß zwischen dem Massenmittelwert und einer Sollmasse abhängt.

Optional wird noch aus den bestimmten Einzelmassen der mehreren ausgestoßenen Dosiermengen 2 zusätzlich zum Massenmittelwert auch deren relative Standardabweichung errechnet und mit einer vorgegebenen Grenzabweichung verglichen. Sofern die errechnete Standardabweichung kleiner als oder gleich der Grenzabweichung ist, so gilt diese Messreihe als prozesstechnisch in Ordnung und statistisch brauchbar. Folglich wird der Massenmittelwert für die Tendenzregelung eingesetzt. Sofern aber die errechnete Standardabweichung größer als die Grenzabweichung ist, gilt diese Messreihe als prozesstechnisch unbrauchbar bzw. statistisch nicht verwendbar. Es wird dann ein Fehlersignal generiert, was für die Ergreifung geeigneter Gegenmaßnahmen zum Anlass genommen wird. Insbesondere kann es zweckmäßig sein, dann den gebildeten Massenmittelwert zu verwerfen, ihn also nicht für eine weitere Tendenzregelung heranzuziehen.

All die vorgenannten Maßnahmen dienen dem Zweck, eine prozesssichere Trend- oder Tendenzregelung herbeizuführen. Dies gilt aber nur für den Vorgang der Tendenzregelung und hat keinen unmittelbaren Einfluss auf die Sortierung bzw. Gut-Schlecht-Ausscheidung der einzelnen Dosiermengen 2. Für letzteres werden die individuell gemessenen Einzelmassen der einzelnen Dosiermengen 2 herangezogen.

## Patentansprüche

1. Verfahren zur Erzeugung einzelner Dosiermengen (2) eines pulvrigen Produkts (1) mittels eines Walzendosierers (3), wobei der Walzendosierer (3) einen Produktvorrat (4), eine Dosierwalze (5) und eine Messvorrichtung (6) zur Massenbestimmung der Dosiermengen (2) umfasst, wobei die Dosierwalze (5) umfangsseitig mit mindestens einer Dosieröffnung (7) versehen ist, wobei die Dosieröffnung (7) innenseitig mittels eines Filterelements (8) begrenzt ist und durch das Filterelement (8) hindurch mit einem Unterdruck beaufschlagbar ist, und wobei das Verfahren folgende Schritte umfasst:
- In einer Füllposition (I) wird die Dosieröffnung (7) aus dem Produktvorrat (4) mit einer Teilmenge des pulvrigen Produkts (1) befällt;
- In der Füllposition (I) wird die Dosieröffnung (7) durch das Filterelement (8) hindurch mit Unterdruck beaufschlagt, wobei sich in der Dosieröffnung (7) eine Dosiermenge (2) des pulvrigen Produkts (1) bildet;
- Die Dosierwalze (5) wird soweit gedreht, dass sich die mit der Dosiermenge (2) befüllte Dosieröffnung (7) in einer Ausstoßposition (III) befindet, in der die Dosiermenge (2) aus der Dosieröffnung (7) ausgestoßen wird;
- Die Dosierwalze (5) wird soweit weitergedreht, dass sich die entleerte Dosieröffnung (7) wieder in der Füllposition (II) befindet;
- Die vorstehenden Schritte werden mehrfach zyklisch wiederholt, wobei die Einzelmassen mehrerer ausgestoßener Dosiermengen (2) sequentiell mittels der Messvorrichtung bestimmt werden;
- Aus den bestimmten Einzelmassen der mehreren ausgestoßenen Dosiermengen (2) wird ein Massenmittelwert gebildet, mit einem vorgegebenen inneren Sollmassenbereich verglichen, und für eine Tendenzregelung wie folgt eingesetzt:
- Sofern der gebildete Massenmittelwert innerhalb des vorgegebenen inneren Sollmassenbereichs liegt, bleibt das Niveau des in der Füllposition (I) auf die Dosieröffnung (7) einwirkenden Unterdrucks unverändert, und die vorstehende Bildung eines Massenmittelwertes beginnt von neuem;
- Sofern der gebildete Massenmittelwert außerhalb des vorgegebenen inneren Sollmassenbereichs liegt, wird ein angepasster Unterdruck derart ermittelt, dass bei zu geringem Massenmittelwert das Niveau des Unterdrucks erhöht und bei zu hohem Massenmittelwert das Niveau des Unterdrucks verringert wird, und die Dosieröffnung (7) wird in der Füllposition mit dem angepassten Unterdruck beaufschlagt.

2. Verfahren nach Anspruch 1,
**dadurch gekennzeichnet, dass** der gebildete Massenmittelwert auch mit einem vorgegebenen äußeren Sollmassenbereich verglichen wird, dass die Beaufschlagung der Dosieröffnung (7) in der Füllposition mit dem angepassten Unterdruck dann erfolgt, wenn der gebildete Massenmittelwert außerhalb des inneren Sollmassenbereichs und innerhalb des äußeren Sollmassenbereichs liegt, und dass ein Fehlersignal dann generiert wird, wenn der gebildete Massenmittelwert außerhalb des äußeren Sollmassenbereichs liegt.

3. Verfahren nach Anspruch 1 oder 2,
**dadurch gekennzeichnet, dass** die Dosieröffnung (7) in der Ausstoßposition (III) durch das Filterelement (8) hindurch mit Überdruck beaufschlagt wird, und dass das Niveau des Überdrucks analog zu dem in der Füllposition (I) wirkenden Unterdruck angepasst wird.

4. Verfahren nach einem der Ansprüche 1 bis 3,
**dadurch gekennzeichnet, dass** die Druckanpassung in fest vorgegebenen Druckschritten vorgenommen wird.

5. Verfahren nach einem der Ansprüche 1 bis 4,
**dadurch gekennzeichnet, dass** die Druckanpassung um einen funktional vom Differenzmaß zwischen Massenmittelwert und Sollmasse abhängigen Anpassungswert vorgenommen wird.

6. Verfahren nach einem der Ansprüche 1 bis 5,
**dadurch gekennzeichnet, dass** die Einzelmassen mehrerer unmittelbar nacheinander ausgestoßener Dosiermengen (2) sequentiell mittels der Messvorrichtung bestimmt werden, und dass aus den bestimmten Einzelmassen der unmittelbar nacheinander ausgestoßenen Dosiermengen (2) der Massenmittelwert gebildet wird.

7. Verfahren nach einem der Ansprüche 1 bis 6,
**dadurch gekennzeichnet, dass** in einem solchen Fall, in dem das Niveau des ermittelten angepassten Unterdrucks außerhalb eines zulässigen Druckbereichs liegt, die Dosieröffnung (7) in der Füllposition mit einem tatsächlich angepassten Unterdruck beaufschlagt wird, dessen Niveau einem korrespondierenden Grenzwert des zulässigen Druckbereichs entspricht.

8. Verfahren nach einem der Ansprüche 1 bis 7,
**dadurch gekennzeichnet, dass** der Massenmittelwert aus mindestens zwanzig und insbesondere aus mindestens einhundert bestimmten Einzelmassen gebildet wird.

9. Verfahren nach einem der Ansprüche 1 bis 8,
**dadurch gekennzeichnet, dass** zusätzlich folgende Verfahrensschritte ausgeführt werden:
- Aus den bestimmten Einzelmassen der mehreren ausgestoßenen Dosiermengen (2) wird zusätzlich zum Massenmittelwert auch deren relative Standardabweichung errechnet und mit einer vorgegebenen Grenzabweichung verglichen;
- Sofern die errechnete Standardabweichung kleiner als oder gleich der Grenzabweichung ist, wird der Massenmittelwert für die Tendenzregelung eingesetzt;
- Sofern die errechnete Standardabweichung größer als die Grenzabweichung ist, wird ein Fehlersignal generiert.

## Claims

1. Method for producing individual dosing quantities (2) of a powdery product (1) by means of a roller doser (3), wherein the roller doser (3) comprises a powder supply (4), a dosing roller (5) and a measuring device (6) for the quantisation of the dosing quantity (2), wherein the dosing roller (5) is provided with at least one dosing opening (7) at its circumference, wherein the dosing opening (7) is bounded by means of a filter element (8) on the inside and can be subjected to a vacuum through the filter element (8), and wherein the method comprises the following steps:
- in a filling position (I) the dosing opening (7) is filled from the powder supply (4) with a sub-quantity of the powdery product (1);
- in the filling position (I) the dosing opening (7) is subjected to a vacuum through the filter element (8), wherein a dosing quantity (2) of the powdery product (1) is formed in the dosing opening (7);
- the dosing roller (5) is rotated until the dosing opening (7) filled with the dosing quantity (2) is in an ejection position (III), in which the dosing quantity (2) is ejected from the dosing opening (7);
- the dosing roller (5) is rotated further until the emptied dosing opening (7) is once again in the filling position (II);
- the above steps are repeated cyclically several times, wherein the individual masses of several ejected dosing quantities (2) are sequentially determined by means of the measuring device;
- from the determined individual masses of the several ejected dosing quantities (2), a mass average value is formed, compared to a preset internal set mass range and used as follows for a trend control:
- if the formed mass average value lies within the preset internal set mass range, the level of the vacuum acting on the dosing opening (7) in the filling position (I) remains unchanged, and the above formation of a mass average value begins again;
- if the formed mass average value lies outside the preset internal set mass range, an adapted vacuum is determined in such a way that, if the mass average value is too low, the level of the vacuum is increased and, if the mass average value is too high, the level of the vacuum is reduced, and the dosing opening (7) is subjected to the adapted vacuum in the filling position.

2. Method according to claim 1,
**characterised in that** the formed mass average value is also compared to a preset external set mass range, **in that** the dosing opening (7) is subjected to the adapted vacuum in the filling position if the formed mass average value lies outside the internal set mass range and inside the external set mass range, and **in that** a fault signal is generated if the formed mass average value lies outside the external set mass range.

3. Method according to claim 1 or 2,
**characterised in that** the dosing opening (7) is subjected to positive pressure through the filter element (8) in the ejection position (III), and **in that** the level of the positive pressure is adapted in analogy to the vacuum acting in the filling position (I).

4. Method according to any of claims 1 to 3,
**characterised in that** the pressure is adapted in fixedly preset pressure steps.

5. Method according to any of claims 1 to 4,
**characterised in that** the pressure is adapted by an adaptation value that functionally depends on the differential measure between mass average value and set mass.

6. Method according to any of claims 1 to 5,
**characterised in that** the individual masses of several dosing quantities (2) ejected immediately after one another are determined sequentially by means of the measuring device, and **in that** the mass average value is formed from the determined individual masses of the quantities (2) ejected immediately after one another.

7. Method according to any of claims 1 to 6,
**characterised in that**, in a case in which the level of the determined adapted vacuum lies outside a permissible pressure range, the dosing opening (7) is subjected to an actually adapted vacuum in the filling position, the level of which vacuum corresponds to a corresponding limit value of the permissible pressure range.

8. Method according to any of claims 1 to 7,
**characterised in that** the mass average value is formed from at least twenty and in particular from at least one hundred determined individual masses.

9. Method according to any of claims 1 to 8,
**characterised in that** the following procedural steps are carried out in addition:
- from the determined individual masses of the several ejected dosing quantities (2), their relative standard deviation is calculated in addition to the mass average value and compared to a preset limit deviation;
- if the calculated standard deviation is less than or equal to the limit deviation, the mass average value is used for the trend control;
- if the calculated standard deviation is greater than the limit deviation, a fault signal is generated.

## Revendications

1. Procédé pour produire des quantités de dosage individuelles (2) d'un produit pulvérulent (1) à l'aide d'un doseur à cylindre (3), dans lequel le doseur à cylindre (3) comprend une réserve de produit (4), un cylindre doseur (5) et un dispositif de mesure (6) pour la détermination de masse des quantités de dosage (2), dans lequel le cylindre doseur (5) est pourvu côté circonférence d'au moins une ouverture de dosage (7), dans lequel l'ouverture de dosage (7) est limitée côté intérieur à l'aide d'un élément filtrant (8) et est apte à être soumise à une dépression à travers l'élément filtrant (8), et dans lequel le procédé comprend les étapes suivantes :
- dans une position de remplissage (I), l'ouverture de dosage (7) est remplie depuis la réserve de produit (4) avec une quantité partielle du produit pulvérulent (1) ;
- dans la position de remplissage (I), l'ouverture de dosage (7) est soumise à une dépression à travers l'élément filtrant (8), dans lequel dans l'ouverture de dosage (7) se forme une quantité de dosage (2) du produit pulvérulent (1) ;
- le cylindre doseur (5) est tourné jusqu'à ce que l'ouverture de dosage (7) remplie avec la quantité de dosage (2) se trouve dans une position d'éjection (III) dans laquelle la quantité de dosage (2) est éjectée de l'ouverture de dosage (7) ;
- le cylindre doseur (5) est encore tourné jusqu'à que l'ouverture de dosage (7) vidée se trouve à nouveau dans la position de remplissage (II) ;
- les étapes précédentes sont répétées cycliquement plusieurs fois, dans lequel les masses individuelles de plusieurs quantités de dosage (2) éjectées sont déterminées séquentiellement à l'aide du dispositif de mesure ;
- à partir des masses individuelles déterminées des plusieurs quantités de dosage (2) éjectées, une valeur moyenne de masse est formée, est comparée à une plage de masse théorique intérieure prédéfinie et est utilisée pour une régulation de tendance comme suit :
- dans la mesure où la valeur moyenne de masse formée est située à l'intérieur de la plage de masse théorique intérieure prédéfinie, le niveau de la dépression agissant dans la position de remplissage (I) sur l'ouverture de dosage (7) reste inchangé, et la formation précédente d'une valeur moyenne de masse recommence ;
- dans la mesure où la valeur moyenne de masse formée est située à l'extérieur de la plage de masse théorique intérieure prédéfinie, une dépression adaptée est recherchée de telle sorte qu'en présence d'une valeur moyenne de masse trop faible le niveau de la dépression soit augmenté et qu'en présence d'une valeur moyenne de masse trop élevée le niveau de la dépression soit réduit, et l'ouverture de dosage (7) est soumise dans la position de remplissage à la dépression adaptée.

2. Procédé selon la revendication 1,
**caractérisé en ce que** la valeur moyenne de masse formée est aussi comparée à une plage de masse théorique extérieure prédéfinie, **en ce que** la soumission de l'ouverture de dosage (7) dans la position de remplissage à la dépression adaptée a lieu quand la valeur moyenne de masse formée est située à l'extérieur de la plage de masse théorique intérieure et à l'intérieur de la plage de masse théorique extérieure, et **en ce qu'**un signal d'erreur est généré quand la valeur moyenne de masse formée est située à l'extérieur de la plage de masse théorique extérieure.

3. Procédé selon la revendication 1 ou 2,
**caractérisé en ce que** l'ouverture de dosage (7), dans la position d'éjection (III), est soumise à une surpression à travers l'élément filtrant (8), et **en ce que** le niveau de la surpression est adapté de manière analogue à la dépression agissant dans la position de remplissage (I).

4. Procédé selon l'une des revendications 1 à 3,
**caractérisé en ce que** l'adaptation de pression est réalisée dans des étapes de pression prédéfinies de manière fixe.

5. Procédé selon l'une des revendications 1 à 4,
**caractérisé en ce que** l'adaptation de pression est réalisée avec une valeur d'adaptation dépendante fonctionnellement de la mesure différentielle entre valeur moyenne de masse et masse théorique.

6. Procédé selon l'une des revendications 1 à 5,
**caractérisé en ce que** les masses individuelles de plusieurs quantités de dosage (2) éjectées directement les unes après les autres sont déterminées séquentiellement à l'aide du dispositif de mesure, et **en ce qu'**à partir des masses individuelles déterminées des quantités de dosage (2) éjectées directement les unes après les autres est formée la valeur moyenne de masse.

7. Procédé selon l'une des revendications 1 à 6,
**caractérisé en ce que** dans un cas où le niveau de la dépression adaptée recherchée est situé à l'extérieur d'une plage de pression autorisée, l'ouverture de dosage (7) dans la position de remplissage est soumise à une dépression réellement adaptée dont le niveau correspond à une valeur limite correspondante de la plage de pression autorisée.

8. Procédé selon l'une des revendications 1 à 7,
**caractérisé en ce que** la valeur moyenne de masse est formée à partir d'au moins vingt et en particulier d'au moins cent masses individuelles déterminées.

9. Procédé selon l'une des revendications 1 à 8,
**caractérisé en ce que** les étapes de procédé suivantes sont réalisées en supplément :
- à partir des masses individuelles déterminées des plusieurs quantités de dosage (2) éjectées, leur écart type relatif est aussi calculé en plus de la valeur moyenne de masse et est comparé à un écart limite prédéfini ;
- dans la mesure où l'écart type calculé est inférieur ou égal à l'écart limite, la valeur moyenne de masse est utilisée pour la régulation de tendance ;
- dans la mesure où l'écart type calculé est supérieur à l'écart limite, un signal d'erreur est généré.
